Europäisches Patentamt

European Patent Office

Office européen des brevets

(11) Numéro de publication: **0 369 893**

**A1**

(12) **DEMANDE DE BREVET EUROPEEN**

(21) Numéro de dépôt: **89403188.9**

(22) Date de dépôt: **20.11.89**

(51) Int. Cl.⁵: **B23K 1/00**

(30) Priorité: **18.11.88 FR 8815620**

(43) Date de publication de la demande:
**23.05.90 Bulletin 90/21**

(84) Etats contractants désignés:
**AT BE CH DE ES FR GB GR IT LI LU NL SE**

(71) Demandeur: **ETABLISSEMENTS FARNIER &
PENIN
Route de Poitiers Zone Industrielle No. 2
B.P. 59
F-79302 Bressuire Cédex(FR)**

(72) Inventeur: **Durand, Daniel
37 rue Henri Marceille
F-33140 Pont de la Maye(FR)**
Inventeur: **Longeot, Olivier
Rabey Isle St Georges
F-33640 Portets(FR)**

(74) Mandataire: **Robert, Jean-Pierre et al
CABINET BOETTCHER 23, rue la Boétie
F-75008 Paris(FR)**

(54) **Dispositif de brasage pour cadres par induction.**

㊼ Le dispositif comporte un inducteur 6 en deux parties symétriques (7 et 8), ouvert pour recevoir le cadre (2) avec le joint à braser (3) entre les deux parties (7 et 8). Ces conducteurs inducteurs (7 et 8) sont branchées en parallèle à la sortie d'un générateur de courant alternatif (11).

FIG_1

## DISPOSITIF DE BRASAGE POUR CADRES PAR INDUCTION

La présente invention concerne un dispositif pour braser par induction des cadres fermés en alliage léger.

Les cadres fermés en alliage léger sont d'emploi très étendu dans de nombreux domaines de l'industrie. On les retrouve plus particulièrement comme huisseries métalliques du bâtiment ainsi qu'éléments constitutifs de baies, fenêtres, hublots que l'on rencontre dans le matériel roulant automobile ou ferrovière, dans la construction navale, dans les véhicules aériens....

Leur fabrication à partir de profilés nécessite de réaliser une ou plusieurs jonctions. Dans le cas où le cadre comporte des coins coudés, la jonction est unique dans l'un des côtés du cadre (c'est le cas également de la réalisation d'un entourage circulaire). Dans le cas où le cadre est réalisé par assemblage et raboutage de montants en coin, le nombre de jonctions est égal au nombre d'angles du cadre.

Parmi les différentes techniques possibles pour réaliser ces jonctions, le brasage est une technique satisfaisante du point de vue de la résistance mécanique du cadre si le métal d'apport et la forme du joint sont bien choisis. Elle est également avantageuse pour ce qui concerne les opérations ultérieures de parachèvement qui sont réduites au minimum.

Par ailleurs, il est connu de réaliser un brasage en utilisant le chauffage par induction, qui présente l'avantage de permettre des temps brefs de chauffage avec des cycles thermiques précis et répétitifs.

L'unique ou la dernière brasure qui ferme le cadre implique que le dispositif inducteur soit ouvert pour pouvoir dégager le cadre ainsi fermé.

La présente invention entend proposer un dispositif pour réaliser le brasage d'un cadre fermé qui permet de réaliser une brasure de qualité malgré le caractère ouvert de l'inducteur.

C'est ainsi que le dispositif objet de l'invention, comporte un générateur de courant alternatif, un inducteur en forme de U et un support de fixation du cadre à braser dans une position où le joint à réaliser se trouve à l'intérieur du U, l'inducteur comportant au moins deux conducteurs formés de manière symétrique par rapport à un plan parallèle au plan du joint à braser et connectés en parallèle au générateur de courant alternatif, tandis que le support de fixation comporte des moyens aptes à maintenir le plan du joint à braser dans le plan de symétrie.

Dans un mode préféré de réalisation, les moyens de fixation du cadre sur le bâti comportent deux machoîres de serrage disposées de part et d'autre du joint à braser au delà des conducteurs inducteurs.

L'invention sera mieux comprise au cours de la description d'un mode de réalisation donnée ciaprès à titre d'exemple, qui permettra d'en dégager les avantages et les caractéristiques secondaires.

Il sera fait référence aux dessins annexés dans lesquels :
- la figure 1 est un schéma du dispositif selon l'invention,
- les figures 2 et 3 représentent deux configurations possibles de conducteurs inducteurs.

Le dispositif représenté aux figures comporte un bâti 1, ici partiellement figuré, pour recevoir le côté 2 du cadre qu'il convient de braser en 3. Ce bâti 1 possède des moyens de fixation du cadre constitués par tout dispositif connu mettant par exemple en oeuvre des machoîres de serrage 4,5 pour immobiliser le cadre en deux zones suffisamment éloignées l'une de l'autre pour pouvoir loger entre elles un inducteur 6 et les préserver d'un échauffement notoire.

L'inducteur 6 comporte dans l'exemple représenté deux conducteurs 7 et 8 conformés en U de manière à pouvoir recevoir entre leurs branches le cadre à braser. Chacune des branches 7a, 7b, 8a, 8b de chaque U est prolongée par une branche en retour respectivement 9a, 9b et 10a, 10b qui relie le U aux bornes 11a, 11b d'un générateur de courant alternatif 12. Ainsi, les conducteurs inducteurs sont reliés en parallèles au générateur. En outre, leur position est symétrique par rapport à un plan P fixe par rapport au bâti, qui est parallèle au plan du joint 3 à braser lorsque le cadre repose sur le bâti, de sorte que lorsque le cadre est fixé sur le bâti, le joint 3 s'étende dans ce plan P de symétrie.

L'inducteur ne chevauche donc pas le plan de la brasure, ce qui est une condition impérative pour une bonne réalisation de cette dernière. On a en effet constaté que si cette condition n'est pas satisfaite, il se produit des points de surchauffe locale aux extrémités du cadre à rabouter qui conduisent à la fusion de ce dernier.

Par ailleurs, le montage en parallèle des conducteurs est également une condition de l'invention à respecter, car un montage en série engendre dans le cadre des courants qui sont, de chaque côté du joint, en opposition de phase et qui ont tendance à se boucler au travers du plan de joint. Ainsi, dès que la brasure fond en un point de ce plan, ces courants s'engouffrent dans la ligne conductrice ainsi réalisée et provoquent une fusion locale des profilés à assembler. En revanche, par un montage en parallèle, les courants sont en phase et leur circulation n'est pas perturbée par la fusion du métal d'apport de brasage.

Enfin, la disposition parfaitement symétrique des conducteurs inducteurs par rapport au plan de joint est une garantie d'équilibre de l'échauffement de part et d'autre de ce plan.

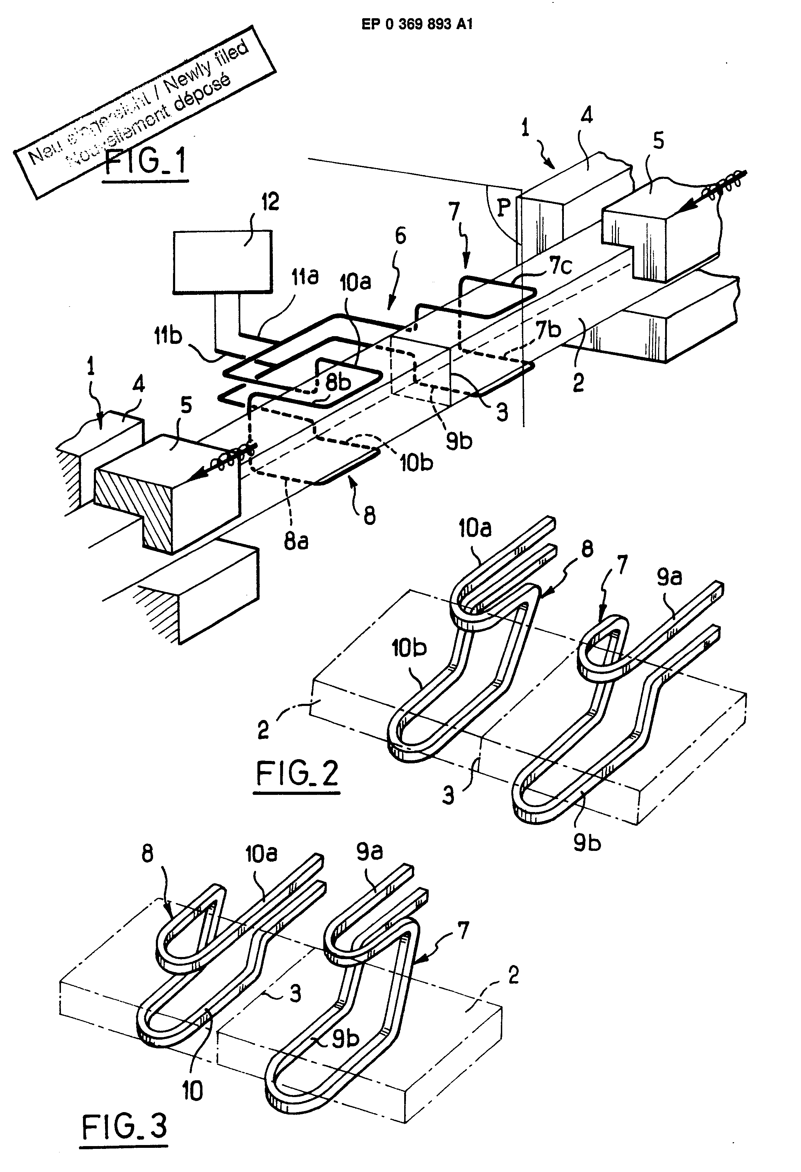

Les figures 2 et 3 illustrent deux dispositions symétriques possibles qui sont équivalentes : l'une (figure 2) dans laquelle les branches de retour 9a, 9b et 10a, 10b sont situées à l'extérieur des U 7 et 8 par rapport au plan de joint 3 et l'autre,(figure 3) dans laquelle ces mêmes branches de retour sont entre les U et le plan de joint 3 (comme dans la figure 1).

On notera enfin que la fixation du cadre sur le bâti par les mâchoires 4 et 5, de part et d'autre de l'inducteur, permet de s'opposer à la dilatation du cadre, ce qui engendre une force longitudinale qui crée un effet de forgeage de la brasure au moment de sa réalisation.

L'invention n'est pas limitée à l'exemple décrit. Elle concerne notamment des inducteurs comprenant une pluralité de conducteurs répartis, comme ceux décrits, en deux groupes symétriques par rapport au joint à braser et branchés en parallèle à la sortie du générateur de courant alternatif.

## Revendications

1. Dispositif de brasage par induction de cadres fermés (2), notamment en alliage léger comportant un générateur de courant alternatif (11), un inducteur (6) en forme de U et un support (1) de fixation du cadre à braser dans une position où le joint (3) à réaliser se trouve à l'intérieur du U, caractérisé en ce que l'inducteur (6) comporte au moins deux conducteurs (7,8) formés de manière symétrique par rapport à un plan parallèle (P) au plan (3) du joint à braser et connectés en parallèle au générateur (11) de courant alternatif, le support de fixation (1) comportant des moyens (4,5) aptes à maintenir le plan (3) du joint à braser dans le plan de symétrie (P).

2. Dispositif selon la revendication 1 caractérisé en ce que chaque conducteur inducteur (7,8) est en forme de U dont chaque branche (7a,7b, 8a,8b) possède un retour (9a,9b, 10a, 10b).

3. Dispositif selon la revendication 2 caractérisé en ce que les retours de connexion de chaque conducteur sont situés du côté du joint à braser.

4. Dispositif selon la revendication 2 caractérisé en ce que les retours de connexion sont situés au-delà du conducteur en U par rapport au joint à braser.

5. Dispositif selon l'une quelconque des revendications précédentes caractérisé en ce qu'il comporte plus d'un conducteur inducteur de chaque côté du joint à braser.

6. Dispositif selon l'une quelconque des revendications précédentes caractérisé en ce que les moyens de fixation du cadre (2) sur le bâti (1) comportent deux mâchoires de serrage (4,5) disposées de part et d'autre du joint (3a) à braser au-delà des conducteurs inducteurs (7,8).

## FIG_1

## FIG_2

## FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 365 563 (C.B. BASINGER)<br>* figures 1,2; colonne 3, lignes 27-31 *<br>--- | 1 | B 23 K 1/00 |
| A | SOVIET INVENTIONS ILLUSTRATED<br>Section électrique, semaine D 27, résumé no. 49181, M2525, 12 Août 1981, Derwent Publications Ltd.; & SU - A - 771911 (DVORYANKOV VL) 25-10-80<br>----- | 1 | |

**DOMAINES TECHNIQUES RECHERCHES (Int. Cl.5)**

B 23 K
H 05 B

Le présent rapport a été établi pour toutes les revendications

| Lieu de la recherche | Date d'achèvement de la recherche | Examinateur |
|---|---|---|
| BERLIN | 07-02-1990 | WUNDERLICH J E |

EPO FORM 1503 03.82 (P0402)